# EUROPEAN PATENT SPECIFICATION

(11) **EP 4 254 978 B1**
(45) Date of publication and mention of the grant of the patent: **13.11.2024**
(21) Application number: 23159458.1
(22) Date of filing: 01.03.2023
(51) Int. Cl.: H04Q 1/02

(54) **PARKING DEVICE, DISTRIBUTION FRAME AND METHOD FOR PARKING A PATCH CORD**
PARKVORRICHTUNG, VERTEILERGESTELL UND VERFAHREN ZUM PARKEN EINER PATCHSCHNUR
DISPOSITIF DE STATIONNEMENT, RÉPARTITEUR ET PROCÉDÉ DE STATIONNEMENT D'UN CORDON DE RACCORDEMENT

(30) Priority: 31.03.2022 NL 2031468
(43) Date of publication of application: 04.10.2023
(73) Proprietor: B.V. Twentsche Kabelfabriek, 7481 KJ Haaksbergen (NL)
(72) Inventor: ABBING, Timo, 7481 KJ HAAKSBERGEN (NL); MULLING, Wouter Frank, 7481 KJ HAAKSBERGEN (NL)
(74) Representative: Melchior, Robin

(56) References cited:
- WO-A1-2018/052782
- WO-A1-2018/065423
- WO-A1-2021/180796

## Description

### BACKGROUND

The invention relates to a parking device, a distribution frame comprising said parking device and a method for parking a patch cord.

US 2006/0008231 A1 discloses a fiber distribution hub with parking adapters for temporarily parking unused connectors. In one embodiment, the parking adapters are arranged stationary on a rear panel. In an alternative embodiment, the parking adapters are supported on hinged parking panels, for example on the hinged doors that provide access to the fiber distribution hub. The hinged parking panels allow for a greater fiber connector density of the subscriber termination field inside the fiber distribution hub.

The embodiments also provide slack loops to minimize slack in the associated patch cords, while allowing for enough slack to reach any of the fiber terminations.

WO 2020/185087 A1 discloses an optical distribution frame with guide channels that define guide paths having incrementally longer lengths to compensate for any length difference in the path travelled by any patch cord from any source to any destination. As such, patch cords with a single, standardized length can be used. Each guide channel may be provided with one or more sub-channels for individually guiding patch cords along the respective guide paths. An additional example of such a device is disclosed by the document WO2018/052782, Corning Res and Development Corporation, published on 22 March 2018.

### SUMMARY OF THE INVENTION

A disadvantage of the fiber distribution hub known from US 2006/0008231 A1 is that, although the slack is minimized, some amount of slack is still required to allow patching to any of the fiber terminations, especially for the patch cords parked at the hinged parking panels. This slack can cause problems in the increasingly congested subscriber termination field of the fiber distribution hub. In particular, the parked patch cords may become entangled with patch cords that are already patched.

The optical distribution frame according to WO 2020/185087 A1 further minimizes slack by providing guide channels that dictate the guide paths to be followed by the patch cords from any source to any destination. The trade-off is that the overlength or free length of the patch cords extending outside of the guide channels at the patch panels is carefully chosen to allow for tension free patching of the patch cords at an appropriate bend radius to a predetermined combination of a source and a destination. Said free length typically does not allow for temporarily parking unused connectors in a remote parking position away from the congested patch panels. The free length may not even allow for re-patching of the connectors to a nearby alternative source and/or destination, or a de-patch position within the patch panel. Hence, when a different free length is required, the entire patch cord needs to be de-patched, removed, rerouted and re-patched.

It is an object of the present invention to provide a parking device, a distribution frame comprising said parking device and a method for parking a patch cord, wherein the flexibility of patching, de-patching and/or parking of the patch cords can be improved.

According to a first aspect, the invention provides a parking device for temporarily parking a connector associated with a patch cord, wherein the parking device comprises a parking panel and a base for supporting the parking panel, wherein the parking panel comprises a parking panel body extending in a parking plane and one or more parking sockets provided at said parking panel body for receiving the plurality of connectors from a parking side of said parking plane, wherein the parking panel is movable relative to the base in a retraction direction facing away from the parking side from a parking position to a retraction position spaced apart from said parking position, wherein the parking device further comprises one or more linear guides for guiding the movement of the parking panel relative to the base in the retraction direction between the parking position and the retraction position.

The parking device according to the present invention can be used as a tool to flexibly de-patch, park, reroute and/or re-patch patch cords which have already been routed through a guide section of a distribution frame to a different combination of a source and destination. In particular, when the parking panel is retracted in the retraction direction while at least one connector is parked in a respective parking socket at said parking panel, the parking panel can pull on the patch cord associated with said one connector and effectively free up or extend the initial free length of the patch cord available for patching. The linear guides can provide additional stability and/or guidance to the parking panel during the movement between the parking position and the retraction position. Hence, the free length of the patch cord can be freed up effectively in the retraction direction in linear manner while maintaining said one connector parked to respective parking socket at the parking panel. The additional free length can be buffered in the parking device to be subsequently used to reach a chosen patching socket of an adjacent patch panel.

In one embodiment the retraction direction extends perpendicular or substantially perpendicular to the parking plane. Hence, the retraction position can be orthogonally behind the parking position considered relative to said parking plane.

In another embodiment the plurality of parking sockets are configured for receiving the plurality of connectors in an insertion direction parallel or substantially parallel to the retraction direction. The parking panel can therefore pull on the patch cord in the same direction as the insertion direction of the associated connector. The connector is less likely to disconnect unintentionally from the respective parking socket in a direction parallel to said insertion direction. Hence, a considerable pulling force can be exerted onto the patch cord via the associated connector in said insertion direction.

In another embodiment the parking device further comprises a drive system for driving the movement of the parking panel relative to the base in the retraction direction. When the patch cord associated with the connector in the parking panel has already been routed through the guide channels of a distribution frame along a significant part of its length, friction will occur between the patch cords and the guide channels. It may be difficult to overcome said friction. In this embodiment, the drive system provides a mechanical alternative that may provide a mechanical force in a more controlled manner and/or at a level exceeding the manual force. The drive system also allows for at least partially automating the movement of the parking panel, for example based on a given additional free length to be freed up.

Preferably, the drive system comprises a first drive unit and second drive unit acting in parallel on the parking panel in the retraction direction. The parallel drive units may prevent misalignment of the parking panel as a result of uneven loads on said parking panel, for example when a connector is not patched in a center position of the parking panel.

More preferably, the first drive unit and the second drive unit are synchronized. Hence, the drive units can act on the parking panel uniformly and/or distribute their respective driving forces evenly over the parking panel.

In one particular embodiment the first drive unit and the second drive unit are spindle drives. Spindle drives can be used to exert a relatively large force onto the parking panel with only a relatively small torque. Hence, the forces exerted by the spindle drives onto the parking panel can easily overcome any friction between the patch cord and the respective guide channel through which they are routed.

In a further embodiment the drive system is configured for exerting a drive force onto the parking panel in the retraction direction in a range of five to eighty Newtons, and preferably in a range of ten to forty Newtons. Said range is sufficient to overcome the friction between the patch cord and the respective guide channel through which they are routed, while being low enough for the connectors to maintain its connection to the respective parking socket.

In another embodiment the parking panel has a width in a lateral direction parallel to the parking plane of less than one-hundred millimeters, and preferably less than fifty millimeters. The parking panel does not consume a lot of space and can be conveniently fitted at a position in a distribution frame where the parking functionality is required, for example close to where the patch cords exit the guide channels. This can effectively reduce slack and minimize the risk of entanglement between patch cords. Moreover, the distribution frame can be designed to be more compact, thereby increasing the density of the connections to be made.

In another embodiment the one or more parking sockets comprises a plurality of parking sockets. The plurality of parking sockets may be distributed over the parking panel body such that for patch cords originating from different locations, a parking socket may be chosen that is closest to the location of the respective patch cord. Alternatively, it is envisioned to have a single parking socket being provided on a carriage that can be moved across the parking panel body towards a position closest to the respective patch cord.

Preferably, the plurality of parking sockets are arranged in three rows or less, and preferably in a single row. With only a few rows or a single row, the parking panel can be relatively narrow.

In another embodiment the parking position and the retraction position are spaced apart over a retraction distance of at least fifty millimeters, preferably at least one-hundred millimeters, and most preferably at least one-hundred-and-fifty millimeters. Hence, with each stroke of the parking panel in the retraction direction, an additional free length of the patch cords can be freed up corresponding to the retraction distance.

In another embodiment the parking device further comprises one or more sensors for generating a signal indicative of the parking panel being present or absent in the parking position, the retraction position, a homing position or any intermediate position between said parking position and the retraction position in the retraction direction. The signals can be used to control and/or automate the movement of the parking panel.

According to a second aspect, the invention provides a distribution frame comprising the parking device according to any one of the embodiments of the first aspect of the invention.

The distribution frame incorporates the parking device according to the first aspect of the invention and therefore has the same technical advantages, which will not be repeated hereafter.

In one embodiment the distribution frame further comprises a first patch panel with a patch panel body extending in a first patching plane, wherein the parking plane is parallel or substantially parallel to the first patching plane. Hence, the connector can be parked in the parking panel in substantially the same manner and/or orientation compared to patching connectors in the first patch panel.

Preferably, the first patch panel is provided with a plurality of patching sockets distributed over said patch panel body for receiving a plurality of connectors from a patching side of said first patching plane, wherein the retraction direction faces away from the patching side. In other words, the connector parked in the parking plane can be retracted in a direction away from the patching side.

In a further embodiment the parking plane, in the parking position of the parking panel, is flush or substantially flush with the first patching plane. The connectors may therefore conveniently be switched from the first patching plane to the parking plane and vice versa in a plane common to both said parking plane and said first patching plane.

In a further embodiment the parking device is located adjacent to the first patch panel in a lateral direction parallel to the first patching plane. Hence, an additional free length of the patch cord may be freed up close to the location of the first patch panel where said additional free length can be used to reach a chosen patching socket.

In a further embodiment the distribution frame further comprises a guide section for guiding patch cords away from the first patch panel, wherein the parking device is located adjacent to the guide section in a lateral direction parallel to the first patching plane. Hence, the parking panel can be located close to where the initial free length of the patch cord extends out of said guide section.

Preferably, the patch parking device is located between the first patch panel and the guide section in said lateral direction. In this manner, the initial free length of a patch cord extending out of said guide section can be parked in the parking panel without interfering with patching of other patch cords at the first patch panel. The additional free length freed up by the retraction of the parking panel can subsequently be picked up and may be used to patch the respective patch cord to a chosen patching socket in the adjacently located first patch panel.

In a further embodiment the guide section comprises a plurality of guide channels for guiding patch cords away from the first patch panel along respective guide paths defined by the plurality of guide channels..

Preferably, the plurality of guide channels start at a common channel entry plane, wherein the one or more parking sockets comprises a plurality of parking sockets arranged in at least one row extending parallel or substantially parallel to said channel entry plane. In this manner, the distance between the guide channels and the parking panel in the lateral direction can be kept the same for any one of the guide channels. Consequently, patch cords from any one of the guide channels can be parked in the parking panel in substantially the same manner, for example with the same initial free length extending from the respective guide channels.

In another embodiment the distribution frame further comprises or is connectable to a control unit that is operationally connected to the parking device for controlling the movement of the parking panel in the retraction direction. The control unit may be operated by a human operator, or it may be configured to determine the appropriate amount of movement autonomously, for example based on a given source and/or destination for a respective one of the patch cords. Furthermore, by providing a control unit, it is possible to control the movement remotely, i.e. without direct manual interacting with the parking device. In particular, the distribution frame as a whole can be controlled remotely, thereby eliminating the need to physically visit the location of said distribution frame. Hence, the parking device may be provided in a location that is not easily reachable by hand because of the large number of patch cords extending across. In particular, the control unit is configured for retracting the parking panel over a buffer distance in the retraction direction automatically or semi-automatically.

According to a third aspect, the invention provides a method for temporarily parking a connector associated with a patch cord using the parking device according to any one of the embodiment of the first aspect of the invention, wherein the method comprises the steps of:
- parking said connector in a respective parking socket of the one or more parking sockets; and
- retracting the parking panel in the retraction direction while said connector is parked in the respective parking socket.

The method relates to the practical implementation of the parking device according to the first aspect to the invention and thus has the same technical advantages, which will not be repeated hereafter.

In one embodiment of the method the parking panel is in the parking position when said connector is being parked in the respective parking socket.

In another embodiment the method further comprises the step of:
- returning the parking panel in a return direction, opposite to the retraction direction, towards the parking position. By returning the parking panel towards the parking position, the additional free length that has been freed up by the movement of the parking panel in the retraction direction can be collected more easily by hand or by a mechanical gripper.

In another embodiment the method further comprises the steps of:
- removing said connector from the respective parking socket; and
- patching said connector to a chosen patching socket of a first patching panel adjacent to the parking device. When patching said connector, the additional free length freed up by the movement of the parking panel in the retraction direction can be at least partially used to reach the chosen patching socket.

In another embodiment the method further comprises the steps of:
- choosing a patching socket of a first patching panel adjacent to the parking device to which said connector in the respective parking socket is to be patched, wherein the patch cord associated with said connector, prior to retracting the parking panel, has an initial free length available for patching that is insufficient to reach the chosen patching socket; and
- retracting the parking panel over a buffer distance in the retraction direction that is at least equal to an additional free length required for the patch cord associated with said connector to reach the chosen patching socket.

The patching socket to which said connector is to be patched can be chosen prior to, during or after the parking of said connector in the parking panel. The free length required to reach the chosen patching socket can be determined, as well as a difference between the required free length and the initial free length that is available. The difference can be used to determine the buffer distance.

Preferably, the buffer distance is at least equal to a lateral distance between the respective parking socket and the chosen patching socket in a lateral direction parallel or substantially parallel to the parking plane when the parking panel is in the parking position. When the parking panel is located close to or directly adjacent to the first patch panel in the lateral direction, said lateral distance may substantially correspond to the additional free length that needs to be freed up in order to reach the chosen patching socket. Typically, the buffer distance will be chosen to be equal to or larger than the required free length, i.e. the sum of the initial free length and the additional free length that is required.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached schematic drawings, in which:
figure 1 shows a front view of a distribution frame comprising a first patch panel, a second patch panel, a guide section and two parking devices according to an first exemplary embodiment of the invention;
figures 2A and 2B show isometric views of one of the parking devices having a parking panel in a parking position and a retraction position, respectively;
figures 3A-3G show top views of a method for temporarily parking connectors with the use of the parking device according to figure 1;
figures 4A-4C show top views of an alternative method for temporarily parking connectors with the use of the parking device according to figure 1; and
figure 5 shows an alternative distribution frame comprising two alternative parking devices according to a second exemplary embodiment of the invention.

### DETAILED DESCRIPTION OF THE INVENTION

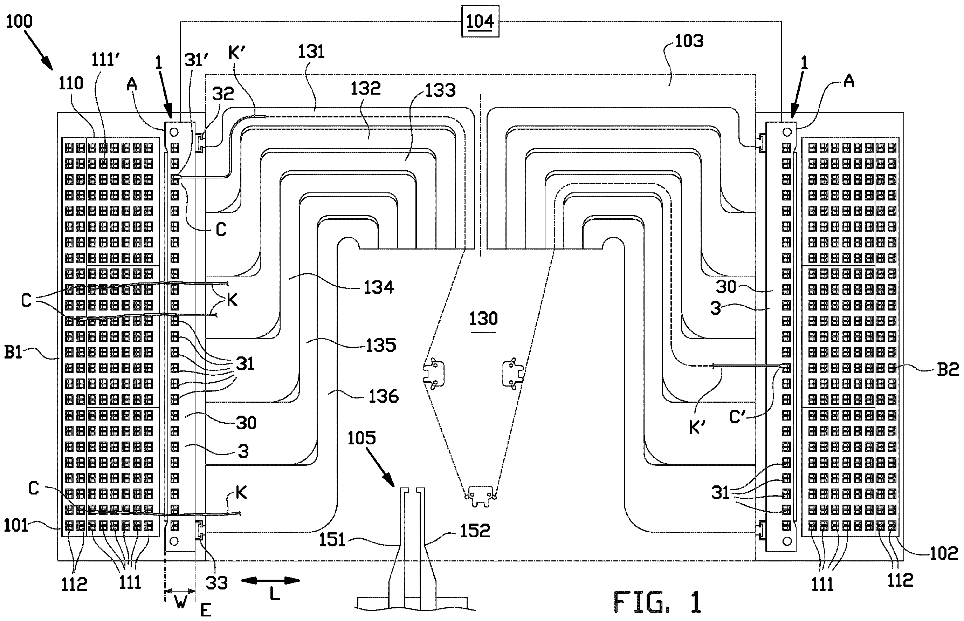

Figure 1 shows a distribution hub or frame 100, in particular an optical distribution frame, for connecting, cross-connecting or interconnecting patch cables or patch cords K, according to a first exemplary embodiment of the invention. The patch cords K are used for telecommunication. In this example, the patch cords K comprise optical fibers. Each patch cord K is provided or terminated with at least one plug or connector C for connecting the respective patch cord K to a source or a destination. In this example, all patch cords K have a single, standardized length.

The distribution frame 100 comprises a first patch panel 101, a second patch panel 102 and a guide section 103 between the first patch panel 101 and the second patch panel 102 for guiding patch cords K from the first patch panel 101 to the second patch panel 102 or *vice versa.* The first patch panel 101 may be used to connect the patch cords K to a source and the second patch panel 102 may be used to connect the patch cords K to a destination. Alternatively, the patch cords K may be connected to a source and a destination on the same patch panel, for example the first patch panel 101 or the second patch panel 102.

Each patch panel 101, 102 is provided with a patch panel body 110. The patch panel body 110 of the first patch panel 101 extends in a first patching plane B1. The patch panel body 110 of the second patch panel 102 extends in a second patching plane B2 which, in this example, is coplanar with the first patching plane B1. Alternatively, the second patching plane B2 may extend parallel, transverse or perpendicular to the first patching plane B1.

It is noted that in the field of the telecommunications, reference is often made to 'panels', which does not necessarily imply a closed or solid plate, a 'panel' is to be interpreted as a functional area of the distribution frame 100 in which one or multiple connections can be made in a common patching plane defined by said area. Similarly, the 'panel body' is to be interpreted as a body defining said area. The 'panel' may alternatively comprises a frame-like or open structured body extending in the respective patching plane B1.

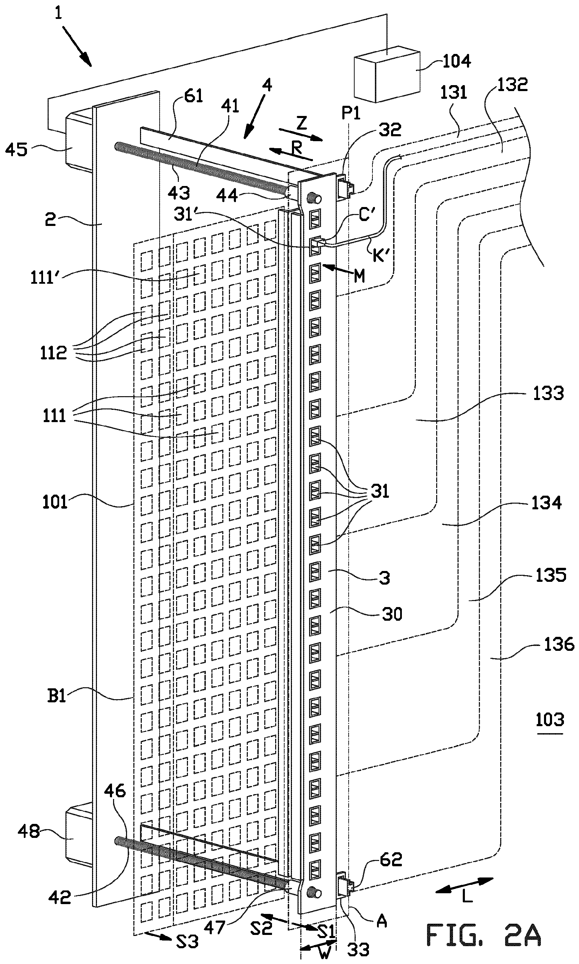

Each patch panel 101, 102 further comprises a plurality of patching adapters, jacks or sockets 111 located at or distributed over the respective patch panel body 110 for receiving and retaining the connectors C associated with the aforementioned patch cords K. In this example, each patch panel 101, 102 is further provided with a plurality of special patching adapters, jacks or sockets, designated as de-patching adapters, jacks or sockets 112, for receiving and retaining the connectors C associated with patch cords K which are not being used or unused. Alternatively, de-patching retainers (not shown) may be used to retain the unused patch cords K directly, without engaging the connectors C associated therewith. The de-patching sockets 112 may be located in a separate area distinct from the area occupied by the patching sockets 111. As shown in figure 2A for the first patching panel 101 only, the patching sockets 111 and/or the de-patching sockets 112 are configured for receiving the connectors C from a patching side S3 of the respective patching plane B1.

In this example, the guide section 103 comprises a plurality of guide channels 131-136 for guiding patch cords K along respective guide paths, in a manner similar to the guide channels described in WO 2020/185087 A1. The plurality of guide channels 131-136 start at a common channel entry plane E. Each guide channel 131-136 may comprise a plurality of subchannels or microchannels to receive and guide individual patch cords K. Additionally or alternatively, a number of spools, bobbins or other not channel-like guide elements may be provided to guide the patch cords K.

As shown in figure 1, in this example, the distribution frame 100 is provided with a gripper 105 for automating patching and/or de-patching connectors C. The gripper 105 may be further arranged for guiding the patch cords K associated with said connector C through the guide section 103. In particular, the gripper 105 is provided with one or more fingers 151, 152 for engaging and/or interacting with the connectors C. Said fingers 151, 152 may be additionally configured for loosely holding and/or sliding along the patch cords K associated with said connectors C to guide said patch cords K along the guide channels 131-136. The gripper 105 may be mounted to a head of a manipulator (not shown) with sufficient freedom of movement to move across the patch panels 101, 102 and the guide section 103, and in particular to reach any of the patching sockets 111 and/or any of the de-patching sockets 112 of the respective patching panels 101, 102.

The distribution frame 100 further comprises or is connectable to a control unit 104 that is operationally, electronically and/or functionally connected to various parts of the distribution frame 100, in particular the gripper 105, for controlling the operation of said distribution frame 100. The gripper 105 may be controlled automatically or semi-automatically.

The guide section 103 may further comprise a switch area 130, known per se from WO 2020/185087 A1, for switching patch cords K between guide channels 131-136 to allow for 'any-to-any' patching connections between the respective patch panels 101, 102.

As shown in figure 1, the distribution frame 100 further comprises two parking devices 1, each of which is configured for temporarily parking a connector C associated with a respective one of the patch cords K. One of the parking devices 1 is located between the first patch panel 101 and the guide section 103 in a lateral direction L parallel to the first patching plane B1. In particular, said one parking device 1 is located adjacent or directly adjacent to the first patch panel 101 at one side and the guide section 103 at the other side. The other of the parking device 1 is located in a similar manner between the second patch panel 102 and the guide section 103 in said lateral direction L.

Although figure 1 shows a distribution frame 100 having two patch panels 101, 102, two parking devices 1 and guide section 103 in between, the present invention may also be applied to half a distribution frame which only features one of the patch panels 101, 102, one of the parking devices 1 and only a part of the guide section 103 for guiding the patch cords K from said one patch panel 101, 102 or the parking device 1 directly to local equipment (not shown).

The features described hereafter focus on one half of the distribution frame 100 only, but may be applied, *mutatis mutandis,* to the other half of the distribution frame 100.

As best seen in figure 2A, the parking device 1 comprises a parking platform or parking panel 3 and a base 2 for supporting the parking panel 3. The parking panel 3 comprises a parking platform body or a parking panel body 30 extending in a parking plane A. Again, the terms 'panel' and 'panel body' do not necessarily imply a closed or solid plate, but merely a functional area of the distribution frame 100. In this example, the parking plane A extends parallel or substantially parallel to the first patching plane B1. The parking panel body 30 has a width W in the lateral direction L which is relatively small or narrow compared to the width of the first patching panel 101. In particular, said width W is less than one-hundred millimeters, and preferably less than fifty millimeters. The parking panel 3 further comprises a plurality of parking adapters, jacks or sockets 31 provided at or distributed over said parking panel body 30. In this example, the parking sockets 31 are arranged in a single row. In particular, the parking sockets 31 are arranged in a single row extending parallel or substantially parallel to the common channel entry plane E of the guide channels 131-136 in the adjacent guide section 103. In this manner, the distance between the guide channels 131-136 and the parking panel 3 in the lateral direction L can be kept the same for any one of the guide channels 131-136.

The parking sockets 31 are configured for receiving the connector C in an insertion direction M from a parking side S1 of the parking plane A. In this example, the parking side S1 is facing in the same direction as the patching side S3 of the first patching plane B1. It is however conceivable to have the first patching plane B1 and the parking plane A extending in different orientations, for example at a right angle to each other. The retraction direction R may for example be arranged perpendicular to the common channel entry plane E, in which case the retraction direction R is parallel or substantially parallel to the first patching plane B1.

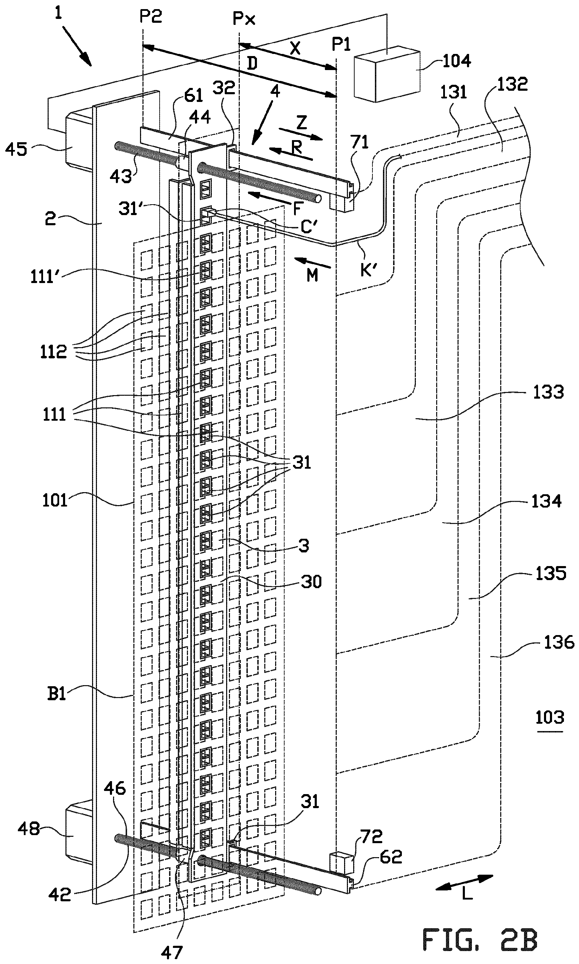

As shown by comparing figures 2A and 2B, the parking panel 3 is displaceable or movable relative to the first patch panel 101, the guide section 103 and/or the base 2 in a retraction direction R with at least a component facing away from the parking side S1, i.e. in the direction of a retraction side S2 opposite to the parking side S1 of the parking plane A. The parking panel 3 is movable in the retraction direction R from a parking position P1, as shown in figure 2A, towards a retraction position P2, as shown in figure 2B, at or near the base 2. Preferably, the parking plane A is flush with the first patching plane B1 when the parking panel 3 is in the parking position P1. Additionally or alternatively, the parking panel 3 may be moved from the retraction position P2 or an intermediate position Px towards the parking position P1 in a return direction Z.

The parking position P1 and the retraction position P2 are spaced apart over a retraction distance D of at least fifty millimeters, preferably at least one-hundred millimeters, and most preferably at least one-hundred-and-fifty millimeters. In figure 2B, the parking panel 3 is shown in the intermediate position Px at a buffer distance X from the parking position P1. The buffer distance X is variable within a range equal to the retraction distance D between the parking position P1 and the retraction position P2.

The parking device 1 is provided with a drive system 4 for driving the movement of the parking panel 3 in the retraction direction R and the return direction Z opposite to said retraction direction R. The control unit 104 of the distribution frame 100 is operationally, electronically and/or functionally connected to the drive system 4 to control the operation thereof. The control unit 104 is configured for retracting the parking panel 3 in the retraction direction R automatically or semi-automatically.

In this example, the drive system 4 comprises a first drive unit 41 and second drive unit 42 acting in parallel on the parking panel 3 in the retraction direction R. The first drive unit 41 and the second drive unit 42 may be synchronized, either by a direct mechanical interconnection (not shown) or by controlling said drive units 41, 42 synchronously with the control unit 104.

Each drive unit 41, 42 comprises a threaded spindle 43, 46, a threaded nut 44, 47 engaged with said spindle 43, 46 for travelling in the retraction direction R and the return direction Z when the respective spindle 43, 46 is rotated, and a drive 45, 48 for rotating the respective spindle 43, 46.

It will however be apparent that many types of drive systems may be used to move the parking panel 3 in a similar manner, including but not limited to: a mechanical linkage, a pneumatic or hydraulic piston, a servo drive, a rack and pinion, a chain, a belt or any other type of suitable drive. Alternatively, the parking panel 3 may be designed to be moved manually or it may be disconnected from the drive system to be moved manually.

When the parking panel 3 is retracted in the retraction direction R while at least one of the connectors C is parked in a respective parking socket 31 at said parking panel 3, the parking panel 3 can pull on the patch cords K associated with said connector C and effectively free up or extend the free length of the patch cord K available for patching.

In this example, the retraction direction R is or extends perpendicular or substantially perpendicular to the parking plane A. Conveniently, the retraction direction R is parallel or substantially parallel to the insertion direction M to ensure that the parking panel pulls on the patch cord K in the same direction as the insertion direction M of the associated connector C. The connector C is less likely to disconnect unintentionally from the respective parking socket 31 in a direction parallel to said insertion direction M. Hence, a considerable pulling force or drive force F can be exerted onto the patch cord K via the associated connector C in said insertion direction M. In particular, the drive system 4 is configured, adapted or arranged for exerting a drive force F onto the parking panel 3 in the retraction direction R in a range of five to eighty Newtons, and preferably in a range of ten to forty Newtons.

As shown in figures 2A and 2B, the parking device 1 further comprises two linear guides 61, 62 for guiding the movement of the parking panel 3 relative to the base 2 in the retraction direction R between the parking position P1 and the retraction position P2. Each linear guide 61, 62 may be formed by a rail that may be suitably engaged by guide shoe or guide block 32, 33 provided at the parking panel 3.

Alternatively, the parking device 1 may be configured for guiding the movement of the parking panel 3 relative to the base 2 along a non-linear path, for example a curvature, with at least a component in the retraction direction R.

As best seen in figure 2B, the parking device 1 further comprises sensors 71, 72 for generating a signal indicative of the parking panel 3 being present or absent in a specific position, for example the parking position P1 or a homing or zeroing position. Alternatively, the sensors 71, 72 may be configured for detecting presence or absence of the parking panel 3 in the retraction position P2 or for detecting a distance travelled by said parking panel 3 in the retraction direction R relative to a reference, for example the parking position P1. The sensors 71, 72 may be proximity sensors or other suitable sensors, such as light sensors, for detecting proximity, presence, absence or distance.

In the aforementioned parking device 1, as shown in figure 1, each parking socket 31 of the plurality of parking sockets 31 is dedicated to and/or aligned with a respective one the guide channel 131-136 and/or a respective one of the subchannels in guide channels 131-136. As such, a patch cord K originating from any one of the guide channels 131-136 or subchannels can be easily parked in the dedicated parking socket 31 close to said one guide channel 131-136 or subchannel.

Although the parking device 1 according to the present invention may be used to temporarily park multiple connectors C associated with patch cords K from different guide channels 131-136 or subchannels simultaneously, in practice the parking device 1 will most likely be used to park one connector C at a time. Therefore, during use, only one parking socket 31 of the plurality of parking sockets 31 is used at a time.

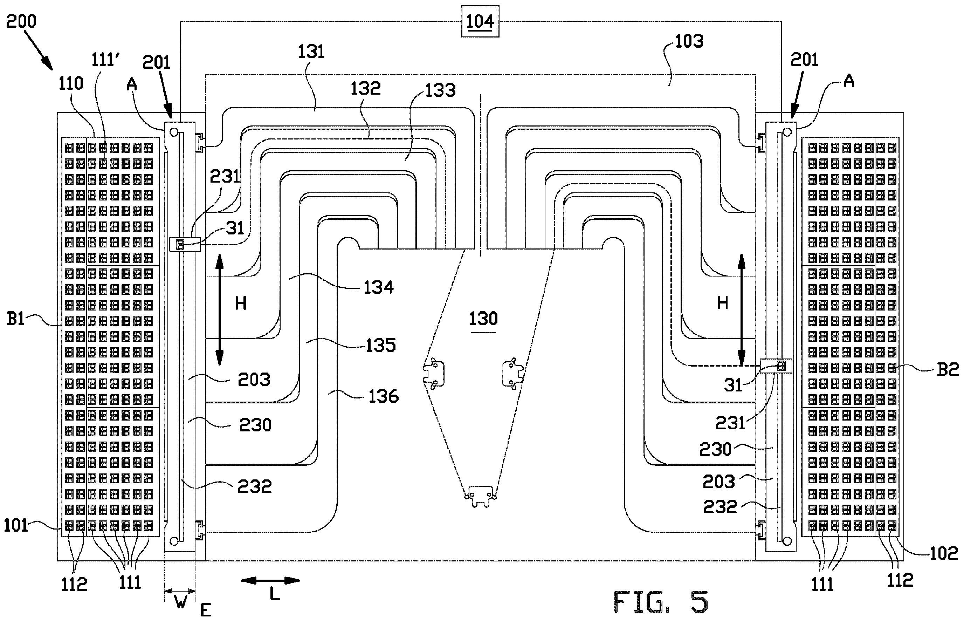

Figure 5 shows an alternative distribution hub or frame 200 according to a second exemplary embodiment of the invention comprising an alternative parking device 201 that can be used for parking a limited number of connectors C, in particular only one connector C, at a time.

The alternative parking device 201 differs from the aforementioned parking device 1 in that the parking panel 203 further comprises a carriage 231 and in that the one or more parking sockets 31 are provided at the parking panel body 230 on said carriage 231. Said carriage 231 can be moved along the parking panel body 230 in an aligning direction H parallel to the parking plane A and perpendicular to the lateral direction L to selectively position said one or more parking sockets 31 at, near or aligned with a respective one of the guide channels 131-136 of the adjacent guide section 103. Hence, in contrast to the large number of parking sockets 31 used in figure 1, a limited number of parking sockets 31, in particular only one or two parking sockets 31, may be provided on said carriage 231 as the carriage 231 can be moved to be selectively positioned at or near any one of the guide channel 131-136 or any one of the subchannels.

The parking panel 203 may be provided with a carriage guide member 232 for guiding the movement of the carriage 231 in the aligning direction H. The movement of the carriage 231 may be automated by a suitable drive (not shown). Alternatively, the carriage 231 may be moved manually to a selected one of the guide channels 131-136.

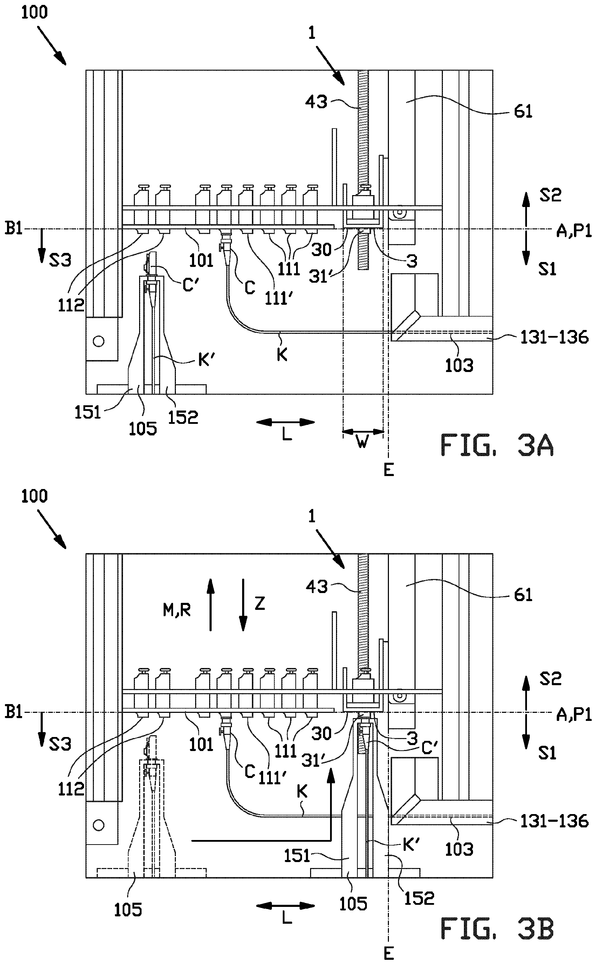

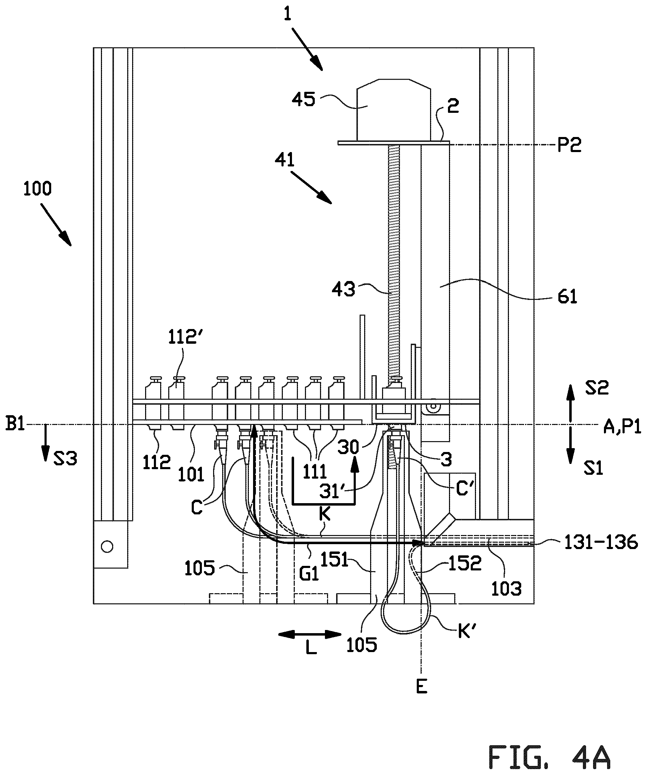

The aforementioned parking devices 1, 201 can be effectively used as a tool to flexibly de-patch, park, reroute and/or re-patch patch cords which have already been routed through the guide section 103 of the distribution frame 100, 200 to a different combination of a source and destination, including any of the patching sockets 111 and/or any of the de-patching sockets 112. Various methods using the aforementioned parking devices 1, 201 and/or the aforementioned distribution frames 100, 200 will now be elucidated with reference to figures 3A-3G and figures 4A-4C.

Figures 3A-3G show a method for temporarily parking one connector C' of the plurality of connectors C associated with a respective patch cord K' of the plurality of patch cords K that has not been routed through the guide section 103. In other words, said one connector C' is temporarily parked in preparation of or during patching of said patch cord K'. At any moment prior to the actual patching, a patching socket 111' of the first patching panel 101 may be chosen to which said connector C' in the respective parking socket 31' is to be patched. This patching socket 111' will hereafter be referred to as the chosen patching socket 111'.

Figure 3A shows the situation in which the parking panel 3 of the parking device 1 is in the parking position P1. The gripper 105 has been operated to engage and hold the one connector C' associated with the respective patch cord K'. The respective patch cord K' may be retrieved from a patch cord storage (not shown) holding a plurality of unused patch cords K.

Figure 3B shows the situation in which the gripper 105 has been controlled to move into alignment with a respective parking socket 31' of the plurality of parking sockets 31 of the parking device 1 and to subsequently insert the one connector C' in the respective parking socket 31'.

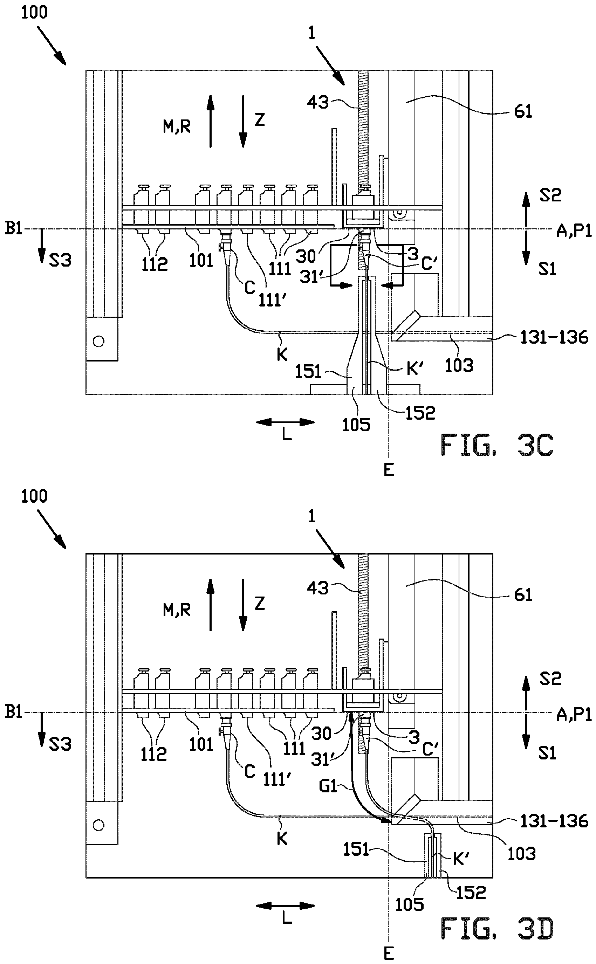

Figure 3C shows the situation in which the gripper 105 has released the one connector C'. The one connector C' is now solely retained by the parking panel 3. The gripper 105 has been moved to a position in which the fingers 151, 152 can loosely enclose the respective patch cord K' associated with said one connector C'. The gripper 105 can move or slide freely along the length of the respective patch cord K' without exerting any significant or excessive pulling force on the respective patch cord K'. The gripper 105 merely forces the respective patch cord K' to follow a path travelled by the gripper 105.

Figure 3D shows the situation in which the gripper 105 is controlled to move along a length of the respective patch cord K' while guiding or routing the respective patch cord K' along a guide path defined by a chosen guide channel 131-136 of the plurality of guide channels 131-136. In this example, the parking panel 3 remains in the parking position P1 until the routing of the respective patch cord K' has been completed. Furthermore, in this example, a connector C provided at the opposite end (not shown) of the respective patch cord K' may already be parked at a parking socket 31 of the parking device 1 at the other side of the distribution frame 100, as shown in figure 1. When the routing of the respective patch cord K' has been completed, an initial free length G1 of the respective patch cord K' remains outside of the chosen guide channel 131-136, i.e. the part of the respective patch cord K' extending beyond the common channel entry plane E. Said initial free length G1 is insufficient to reach the chosen patching socket 111', in particular taking into account the minimum bend radius for the respective patch cord K'.

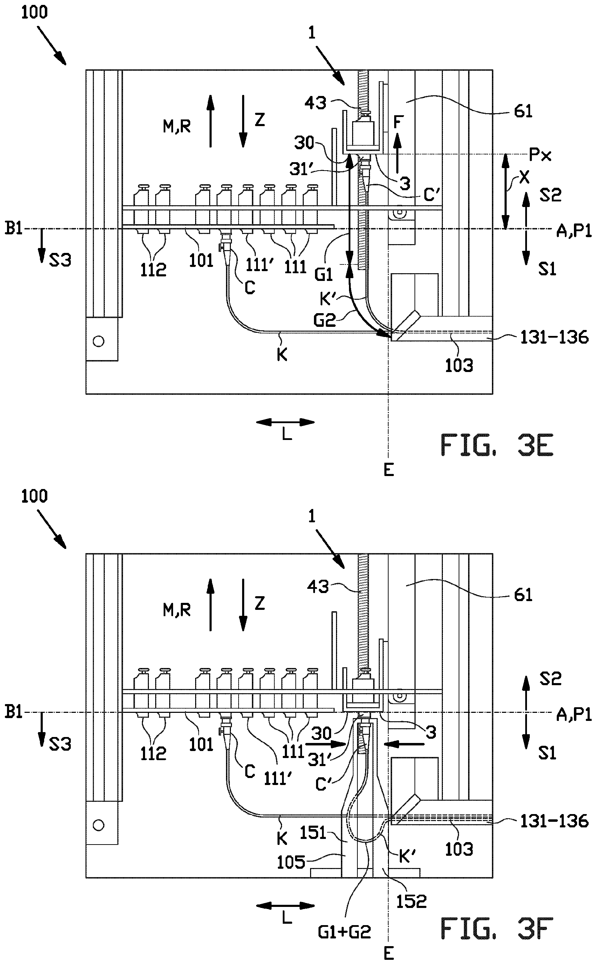

Figure 3E shows the situation in which the parking device 1 is controlled to retract the parking panel 3 in the retraction direction R while said one connector C' is parked or retained in the respective parking socket 31' of said parking panel 3. In particular, the parking panel 3 is retracted into an intermediate position Px over a buffer distance X in the retraction direction R. The buffer distance X is chosen, calculated or determined, based on the chosen patching socket 111' to be reached, to be least equal to an additional free length G2 required for the patch cord K' associated with said connector C' to reach said chosen patching socket 111'. Said additional free length G2 is freed up and/or pulled into the parking device 1 by the retraction of the parking panel 3 effectively pulling on the respective patch cord K'. In other words, the additional free length G2 required to reach the chose patching socket 111' is buffered in the parking device 1.

Typically, the buffer distance X will be chosen to be equal to or larger than the required free length, i.e. the sum of the initial free length G1 and the additional free length G2 that is required.

In this example, the buffer distance X may be at least equal to a lateral distance between the respective parking socket 31' and the chosen patching socket 111' in a lateral direction L parallel to the parking plane A when the parking panel 3 is in the parking position P1.

The buffer distance X can be input manually, for example by a human operator, or determined automatically by the control unit 104 based on the chosen patching socket 111' .

Figure 3F shows the situation in which the parking device 1 is controlled to return the parking panel 3 in a return direction Z, opposite to the retraction direction R, towards the parking position P1. This effectively feeds or pays out the buffer additional free length G2 and the initial free length G1 of the respective patch cord K' while presenting the one connector C' associated with the respective patch cord K' in a position that can be easily reached by the gripper 105. The gripper 105 is controlled to engage and/or pick up said one connector C' at the respective parking socket 31'.

Optionally, the gripper 105 may be adapted to pick up two or more connectors C at once.

Alternatively, the gripper 105 may be configured to reach into the parking device 1 up to the intermediate position Px of figure 3E, for example by providing the gripper 105 with sufficiently long and thin fingers 151, 152, in order to pick up the one connector C' directly at said intermediate position Px.

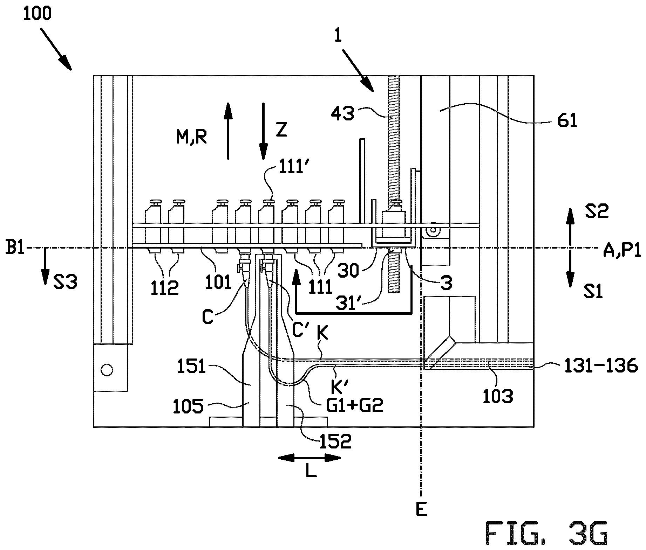

Figure 3G shows the situation in which the gripper 105 is controlled to remove and/or disconnect the one connector C' from the respective parking socket 31' and to subsequently transfer said one connector C' to the chosen patching socket 111' at the first patch panel 101, using the available free length of the respective patch cord K', which is now a combination of the initial free length G1 and the additional free length G2.

Figures 4A-4C show an alternative method for temporarily parking one connector C' of the plurality of connectors C associated with a respective patch cord K' of the plurality of patch cords K in preparation of or during rerouting and/or de-patching of said patch cord K'.

Figure 4A shows the situation in which the respective patch cord K' is disconnected, removed or de-patched from one of the patching sockets 111 of the first patch panel 101 and moved to the parking device 1 where said one connector C' associated with the respective patch cord K' is parked in a respective parking socket 31' of the plurality of parking sockets 31.

As shown in dashed lines, the respective patch cord K', prior to de-patching, had an initial free length G1 available for patching between the patching socket 111 to which it was originally patched and the guide channels 131-136 that is considerably longer than the initial free length G1 available for patching in figure 3D. Hence, the respective patch cord K' can theoretically be patched to any patching socket 111 that is reachable with the available free length G1 of figure 4A. In this case however, one de-patching socket 112' of the plurality of de-patching sockets 112 of the first patch panel 101 has been chosen as the destination for the respective patch cord K', because the respective patch cord K' will not be used for a while. The chosen de-patching socket 112' is out of the reach of the respective patch cord K', despite the considerable initial free length G1 available.

Although this method will further be described in relation to the chosen de-patching socket 112, it will be clear that the following steps may also apply to a method in which the respective patch cord K' is rerouted to be patch to any of the patching sockets 111 which are out of reach of the respective patch cord K'.

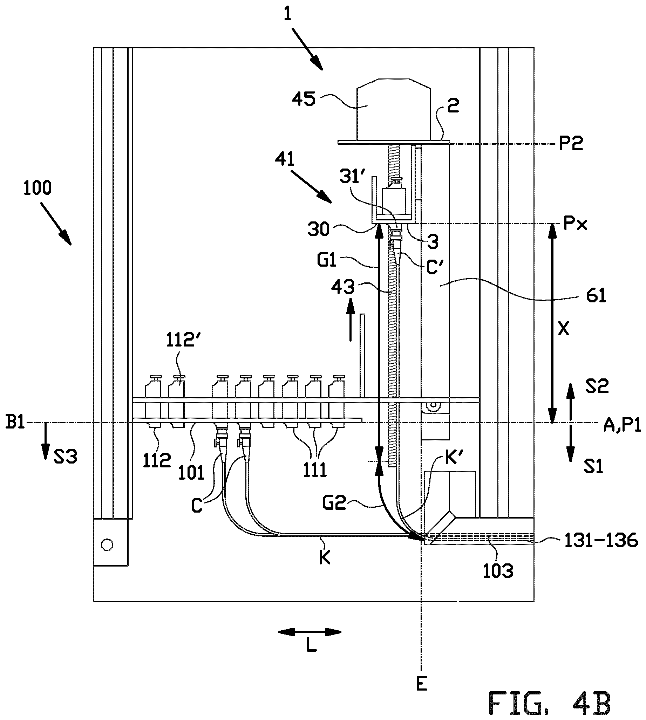

Figure 4B shows a situation similar to figure 3E in which the parking panel 3 is retracted to free up an additional free length G2 of the respective patch cord K' which is required to reach the chosen de-patching socket 112'. In this example, during a first part of the retraction movement, the initially available free length G1 of the respective patch cord K' is buffered in the parking device 1. It is only after said initial free length G1 has been buffered that a further retraction of the parking panel 3 causes the additional free length G2 to be freed up. Hence, compared to the situation of figure 3E, the parking panel 3 has to be retracted over a considerably longer buffer distance X up to an intermediate position Px close to the retraction position P2 at or near the base 2 of the parking device 1.

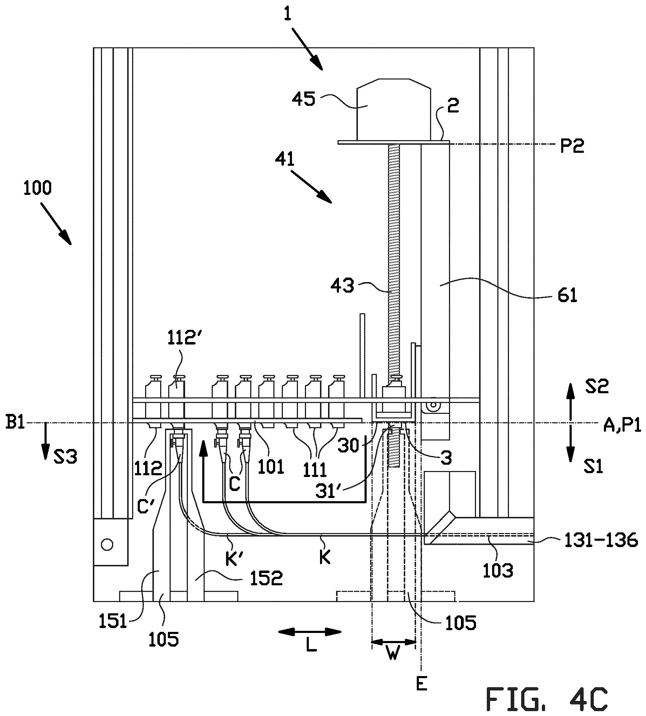

Figure 4C shows a situation similar to figures 3F and 3G in which the parking panel 3 is returned to the parking position P1, the gripper 105 picks up said one connector C' and the combined free length G1+G2 is used to reach the chosen de-patching socket 112' and to patch the respective patch cord K' to said chosen de-patching socket 112' .

It is further noted that the parking devices 1 at opposite ends of the guide section 103 may be controlled to cooperate with each other in a balanced manner by retracting the parking panel 3 at one end of the said guide section 103 in the retraction direction R while simultaneously returning the parking panel 3 at the other end of said guide section 103 in the return direction Z to free up additional free length of the patch cord K' from the guide section 103 at said one end while simultaneously guiding or feeding a decreasing free length of the same patch cord K' into the guide section 103 at the other end. Hence, the free lengths of the patch cord K' at both ends of said guide section 103 can be manipulated in a controlled manner with a reduced risk of said free lengths getting entangled with other patch cords K in the distribution frame 100.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Parking device (1) for temporarily parking a connector (C') associated with a patch cord (K'), wherein the parking device (1) comprises a parking panel (3) and a base (2) for supporting the parking panel (3), wherein the parking panel (3) comprises a parking panel body (30) extending in a parking plane (A) and one or more parking sockets (31) provided at said parking panel body (30) for receiving the connector (C') from a parking side (S1) of said parking plane (A), the parking device **characterized in that** the parking panel (3) is movable relative to the base (2) in a retraction direction (R) facing away from the parking side (S1) from a parking position (P1) to a retraction position (P2) spaced apart from said parking position (P1), wherein the parking device (1) further comprises one or more linear guides (61, 62) for guiding the movement of the parking panel (3) relative to the base (2) in the retraction direction (R) between the parking position (P1) and the retraction position (P2).

2. Parking device (1) according to claim 1, wherein the retraction direction (R) extends perpendicular or substantially perpendicular to the parking plane (A).

3. Parking device (1) according to claim 1 or 2, wherein the one or more parking sockets (31) are configured for receiving the connector (C') in an insertion direction (M) parallel or substantially parallel to the retraction direction (R).

4. Parking device (1) according to any one of the preceding claims, wherein the parking device (1) further comprises a drive system (4) for driving the movement of the parking panel (3) relative to the base (2) in the retraction direction (R),
preferably wherein the drive system (4) comprises a first drive unit (41) and a second drive unit (42), in particular spindle drives, acting in parallel on the parking panel (3) in the retraction direction (R),
more preferably wherein the first drive unit (41) and the second drive unit (42) are synchronized.

5. Parking device (1) according to any one of the preceding claims, wherein the parking position (P1) and the retraction position (P2) are spaced apart over a retraction distance (D) of at least fifty millimeters, preferably at least one-hundred millimeters, and most preferably at least one-hundred-and-fifty millimeters.

6. Parking device (1) according to any one of the preceding claims, wherein the parking device (1) further comprises one or more sensors (71, 72) for generating a signal indicative of the parking panel (3) being present or absent in the parking position (P1), the retraction position (P2), a homing position or any intermediate position (Px) between said parking position (P1) and the retraction position (P2) in the retraction direction (R).

7. Distribution frame (100) comprising the parking device (1) according to any one of the preceding claims.

8. Distribution frame (100) according to claim 7, wherein the distribution frame (100) further comprises a first patch panel (101) with a patch panel body (110) extending in a first patching plane (B1), wherein the parking plane (A) is parallel or substantially parallel to the first patching plane (B1),
preferably wherein the first patch panel (101) is provided with a plurality of patching sockets (111) distributed over said patch panel body (110) for receiving a plurality of connectors (C') from a patching side (S3) of said first patching plane (B1), wherein the retraction direction (R) faces away from the patching side (S3).

9. Distribution frame (100) according to claim 8, wherein the parking plane (A), in the parking position (P1) of the parking panel (3), is flush or substantially flush with the first patching plane (B1).

10. Distribution frame (100) according to any one of claims 7-9, wherein the parking device (1) is located adjacent to the first patch panel (101) in a lateral direction (L) parallel to the first patching plane (B1),
preferably wherein the distribution frame (100) further comprises a guide section (103) for guiding patch cords (K') away from the first patch panel (101), wherein the parking device (1) is located adjacent to the guide section (103) in a lateral direction (L) parallel to the first patching plane (B1),
more preferably wherein the parking device (1) is located between the first patch panel (101) and the guide section (103) in said lateral direction (L).

11. Distribution frame (100) according to claim 10, wherein the guide section (103) comprises a plurality of guide channels (131-136) for guiding the patch cords (K') away from the first patch panel (101) along respective guide paths defined by the plurality of guide channels (131-136),
preferably wherein the plurality of guide channels (131-136) start at a common channel entry plane (E), wherein the one or more parking sockets (31) comprises a plurality of parking sockets (31) arranged in at least one row extending parallel or substantially parallel to said channel entry plane (E).

12. Distribution frame (100) according to any one of claims 7-11, wherein the distribution frame (100) further comprises or is connectable to a control unit (104) that is operationally connected to the parking device (1) for controlling the movement of the parking panel (3) in the retraction direction (R),
preferably wherein the control unit (104) is configured for retracting the parking panel (3) over a buffer distance (X) in the retraction direction (R) automatically or semi-automatically.

13. Method for temporarily parking a connector (C') associated with a patch cord (K') using the parking device (1) according to any one of claims 1-6, wherein the method comprises the steps of:
- parking said connector (C') in a respective parking socket (31') of the one or more parking sockets (31); and
- retracting the parking panel (3) in the retraction direction (R) while said connector (C') is parked in the respective parking socket (31').

14. Method according to claim 13, wherein the parking panel (3) is in the parking position when said connector (C') is being parked in the respective parking socket (31'),
preferably wherein the method further comprises the step of:
- returning the parking panel (3) in a return direction (Z), opposite to the retraction direction (R), towards the parking position (P1).

15. Method according to claim 13 or 14, wherein the method further comprises the steps of:
- removing said connector (C') from the respective parking socket (31'); and
- patching said connector (C') to a chosen patching socket (111') of a first patching panel (3) adjacent to the parking device (1),
preferably wherein the method further comprises the steps of:
- choosing a patching socket (111') of a first patching panel (101) adjacent to the parking device (1) to which said connector (C') in the respective parking socket (31') is to be patched, wherein the patch cord (K') associated with said connector (C'), prior to retracting the parking panel (3), has an initial free length (G1) available for patching that is insufficient to reach the chosen patching socket (111'); and
- retracting the parking panel (3) over a buffer distance (X) in the retraction direction (R) that is at least equal to an additional free length (G2) required for the patch cord (K') associated with said connector (C') to reach the chosen patching socket (111'),
more preferably wherein the buffer distance (X) is at least equal to a lateral distance between the respective parking socket (31') and the chosen patching socket (111') in a lateral direction (L) parallel or substantially parallel to the parking plane (A) when the parking panel (3) is in the parking position (P1).

## Patentansprüche

1. Parkvorrichtung (1) zum vorübergehenden Parken eines Verbinders (C'), der einem Patchkabel (K') zugeordnet ist, wobei die Parkvorrichtung (1) ein Parkpanel (3) und ein Unterteil (2) zum Abstützen des Parkpanels (3) aufweist, wobei das Parkpanel (3) einen Parkpanelkörper (30), der sich in einer Parkebene (A) erstreckt, und eine oder mehrere Parkbuchsen (31), die an dem Parkpanelkörper (30) vorgesehen sind, zum Aufnehmen des Verbinders (C') von einer Parkseite (S1) der Parkebene (A) her aufweist, wobei die Parkvorrichtung **dadurch gekennzeichnet ist, dass** das Parkpanel (3) bezüglich des Unterteils (2) in einer Einzugsrichtung (R), die von der Parkseite (S1) abgewandt ist, aus einer Parkposition (P1) in eine von der Parkposition (P1) beabstandete Einzugsposition (P2) bewegbar ist, wobei die Parkvorrichtung (1) ferner eine oder mehrere Linearführungen (61, 62) zum Führen der Bewegung des Parkpanels (3) bezüglich des Unterteils (2) in der Einzugsrichtung (R) zwischen der Parkposition (P1) und der Einzugsposition (P2) aufweist.

2. Parkvorrichtung (1) nach Anspruch 1, wobei die Einzugsrichtung (R) senkrecht oder im Wesentlichen senkrecht zur Parkebene (A) verläuft.

3. Parkvorrichtung (1) nach Anspruch 1 oder 2, wobei die ein oder mehreren Parkbuchsen (31) dazu eingerichtet sind, den Verbinder (C') in einer Einsetzrichtung (M) aufzunehmen, die parallel oder im Wesentlichen parallel zur Einzugsrichtung (R) ist.

4. Parkvorrichtung (1) nach einem der vorhergehenden Ansprüche, wobei die Parkvorrichtung (1) ferner ein Antriebssystem (4) zum Antreiben der Bewegung des Parkpanels (3) bezüglich des Unterteils (2) in der Einzugsrichtung (R) aufweist,
wobei vorzugsweise das Antriebssystem (4) eine erste Antriebseinheit (41) und eine zweite Antriebseinheit (42), insbesondere Spindelantriebe, aufweist, die parallel in der Einzugsrichtung (R) auf das Parkpanel (3) wirken,
wobei besonders bevorzugt die erste Antriebseinheit (41) und die Antriebseinheit (42) synchronisiert sind.

5. Parkvorrichtung (1) nach einem der vorhergehenden Ansprüche, wobei die Parkposition (P1) und die Einzugsposition (P2) um einen Einzugsabstand (D) von mindestens fünfzig Millimetern, vorzugsweise mindestens einhundert Millimetern und am meisten bevorzugt mindestens einhundertfünfzig Millimetern beabstandet sind.

6. Parkvorrichtung (1) nach einem der vorhergehenden Ansprüche, wobei die Parkvorrichtung (1) ferner einen oder mehrere Sensoren (71, 72) zum Erzeugen eines Signals aufweist, das anzeigt, ob das Parkpanel (3) in der Parkposition (P1), der Einzugsposition (P2), einer Referenzposition oder einer beliebigen Zwischenposition (Px) zwischen der Parkposition (P1) und der Einzugsposition (P2) in der Einzugsrichtung (R) anwesend oder abwesend ist.

7. Verteilerrahmen (100), welcher die Parkvorrichtung (1) nach einem der vorhergehenden Ansprüche aufweist.

8. Verteilerrahmen (100) nach Anspruch 7, wobei der Verteilerrahmen (100) ferner ein erstes Patchpanel (101) mit einem Patchpanelkörper (110) aufweist, der sich in einer ersten Patchebene (B1) erstreckt, wobei die Parkebene (A) parallel oder im Wesentlichen parallel zu der ersten Patchebene (B1) ist,
wobei vorzugsweise das erste Patchpanel (101) mit einer Mehrzahl von Patchbuchsen (111), die über den Patchpanelkörper (110) verteilt sind, zum Aufnehmen einer Mehrzahl von Verbindern (C') von einer Patchseite (S3) der ersten Patchebene (B1) her versehen ist, wobei die Einzugsrichtung (R) von der Patchseite (S3) abgewandt ist.

9. Verteilerrahmen (100) nach Anspruch 8, wobei die Parkebene (A) in der Parkposition (P1) des Parkpanels (3) mit der ersten Patchebene (B1) bündig oder im Wesentlichen bündig ist.

10. Verteilerrahmen (100) nach einem der Ansprüche 7-9, wobei die Parkvorrichtung (1) zum ersten Patchpanel (101) in einer seitlichen Richtung (L), die zur ersten Patchebene (B1) parallel ist, benachbart angeordnet ist,
wobei vorzugsweise der Verteilerrahmen (100) einen Führungsabschnitt (103) zum Führen von Patchkabeln (K') vom ersten Patchpanel (101) weg aufweist, wobei die Parkvorrichtung (1) zum Führungsabschnitt (103) in einer seitlichen Richtung (L), die zur ersten Patchebene (B1) parallel ist, benachbart angeordnet ist,
wobei insbesondere die Parkvorrichtung (1) in der seitlichen Richtung (L) zwischen dem ersten Patchpanel (101) und dem Führungsabschnitt (103) angeordnet ist.

11. Verteilerrahmen (100) nach Anspruch 10, wobei der Führungsabschnitt (103) eine Mehrzahl von Führungskanälen (131-136) zum Führen der Patchkabel (K') vom ersten Patchpanel (101) weg entlang jeweiliger Führungswege, die durch die Mehrzahl von Führungskanälen (131-136) definiert sind, aufweist,
wobei vorzugsweise die Mehrzahl von Führungskanälen (131-136) an einer gemeinsamen Kanaleintrittsebene (E) beginnt, wobei die ein oder mehreren Parkbuchsen (31) eine Mehrzahl von Parkbuchsen (31) aufweisen, die in mindestens einer Reihe angeordnet sind, die sich parallel oder im Wesentlichen parallel zu der Kanaleintrittsebene (E) erstreckt.

12. Verteilerrahmen (100) nach einem der Ansprüche 7-11, wobei der Verteilerrahmen (100) ferner eine Steuereinheit (104), die mit der Parkvorrichtung (1) zum Steuern der Bewegung des Parkpanels (3) in der Einzugsrichtung (R) in Wirkverbindung steht, aufweist oder mit dieser verbindbar ist,
wobei vorzugsweise die Steuereinheit (104) dazu eingerichtet ist, das Parkpanel (3) um einen Pufferabstand (X) in der Einzugsrichtung (R) automatisch oder halbautomatisch einzuziehen.

13. Verfahren zum vorübergehenden Parken eines Verbinders (C'), der einem Patchkabel (K') zugeordnet ist, unter Verwendung der Parkvorrichtung (1) nach einem der Ansprüche 1-6, wobei das Verfahren die Schritte umfasst:
- Parken des Verbinders (C') in einer jeweiligen Parkbuchse (31') von den ein oder mehreren Parkbuchsen (31); und
- Einziehen des Parkpanels (3) in der Einzugsrichtung (R), während der Verbinder (C') in der jeweiligen Parkbuchse (31') geparkt ist.

14. Verfahren nach Anspruch 13, wobei das Parkpanel (3) sich in der Parkposition befindet, wenn der Verbinder (C') in der jeweiligen Parkbuchse (31') geparkt ist,
wobei das Verfahren vorzugsweise ferner den Schritt umfasst:
- Zurückbewegen des Parkpanels (3) in einer Rückrichtung (Z), die zur Einzugsrichtung (R) entgegengesetzt ist, in Richtung der Parkposition (P1).

15. Verfahren nach Anspruch 13 oder 14, wobei das Verfahren ferner die Schritte umfasst:
- Entfernen des Verbinders (C') aus der jeweiligen Parkbuchse (31'); und
- Patchen des Verbinders (C') an einer gewählten Patchbuchse (111') eines der Parkvorrichtung (1) benachbarten ersten Patchpanels (3),
wobei das Verfahren vorzugsweise ferner die Schritte umfasst:
- Wählen einer Patchbuchse (111') eines der Parkvorrichtung (1) benachbarten ersten Patchpanels (101), an welcher der Verbinder (C') in der jeweiligen Parkbuchse (31') gepatcht werden soll, wobei das Patchkabel (K'), das dem Verbinder (C') zugeordnet ist, vor dem Einziehen des Parkpanels (3) eine zum Patchen verfügbare anfängliche freie Länge (G1) aufweist, welche unzureichend ist, um die gewählte Patchbuchse (111') zu erreichen; und
- Einziehen des Parkpanels (3) um einen Pufferabstand (X) in der Einzugsrichtung (R), welcher mindestens gleich einer zusätzlichen freien Länge (G2) ist, die erforderlich ist, damit das Patchkabel (K'), das dem Verbinder (C') zugeordnet ist, die gewählte Patchbuchse (111') erreicht,
wobei insbesondere der Pufferabstand (X) mindestens gleich einem seitlichen Abstand zwischen der jeweiligen Parkbuchse (31') und der gewählten Patchbuchse (111') in einer seitlichen Richtung (L) ist, die zur Parkebene (A) parallel oder im Wesentlichen parallel ist, wenn sich das Parkpanel (3) in der Parkposition (P1) befindet.

## Revendications

1. Dispositif de parcage (1) pour stationner temporairement un connecteur (C') associé à un cordon de connexion (K'), dans lequel le dispositif de parcage (1) comprend un panneau de parcage (3) et une base (2) pour supporter le panneau de parcage (3), dans lequel le panneau de parcage (3) comprend un corps de panneau de parcage (30) s'étendant dans un plan de parcage (A) et une ou plusieurs douilles de parcage (31) prévues au niveau dudit corps de panneau de parcage (30) pour recevoir le connecteur (C') à partir d'un côté de parcage (S1) dudit plan de parcage (A), le dispositif de parcage étant **caractérisé en ce que** le panneau de parcage (3) est mobile par rapport à la base (2) dans une direction de rétraction (R) orienté à l'opposé du côté de parcage (S1) à partir d'une position de parcage (P1) vers une position de rétraction (P2) espacée de ladite position de parcage (P1), dans lequel le dispositif de parcage (1) comprend en outre un ou plusieurs guides linéaires (61, 62) pour guider le déplacement du panneau de parcage (3) par rapport à la base (2) dans la direction de rétraction (R) entre la position de parcage (P1) et la position de rétraction (P2).

2. Dispositif de parcage (1) selon la revendication 1, dans lequel la direction de rétraction (R) s'étend perpendiculairement ou sensiblement perpendiculairement au plan de parcage (A).

3. Dispositif de parcage (1) selon la revendication 1 ou 2, dans lequel les une ou plusieurs douilles de parcage (31) sont configurées pour recevoir le connecteur (C') dans une direction d'insertion (M) parallèle ou sensiblement parallèle à la direction de rétraction (R).

4. Dispositif de parcage (1) selon l'une quelconque des revendications précédentes, dans lequel le dispositif de parcage (1) comprend en outre un système d'entraînement (4) pour entraîner le déplacement du panneau de parcage (3) par rapport à la base (2) dans la direction de rétraction (R),
de préférence dans lequel le système d'entraînement (4) comprend une première unité d'entraînement (41) et une seconde unité d'entraînement (42), en particulier des entraînements à broche, agissant en parallèle sur le panneau de parcage (3) dans la direction de rétraction (R),
de manière plus préférée dans lequel la première unité d'entraînement (41) et la seconde unité d'entraînement (42) sont synchronisées.

5. Dispositif de parcage (1) selon l'une quelconque des revendications précédentes, dans lequel la position de parcage (P1) et la position de rétraction (P2) sont espacées sur une distance de rétraction (D) d'au moins cinquante millimètres, de préférence d'au moins cent millimètres, et de la manière la plus préférée d'au moins cent cinquante millimètres.

6. Dispositif de parcage (1) selon l'une quelconque des revendications précédentes, dans lequel le dispositif de parcage (1) comprend en outre un ou plusieurs capteurs (71, 72) pour générer un signal indiquant que le panneau de parcage (3) est présent ou absent dans la position de parcage (P1), la position de rétraction (P2), une position de départ ou toute position intermédiaire (Px) entre ladite position de parcage (P1) et la position de rétraction (P2) dans la direction de rétraction (R).

7. Cadre de distribution (100) comprenant le dispositif de parcage (1) selon l'une quelconque des revendications précédentes.

8. Cadre de distribution (100) selon la revendication 7, dans lequel le cadre de distribution (100) comprend en outre un premier panneau de connexion (101) avec un corps de panneau de connexion (110) s'étendant dans un premier plan de connexion (B1), dans lequel le plan de parcage (A) est parallèle ou sensiblement parallèle au premier plan de connexion (B1),
de préférence, dans lequel le premier panneau de connexion (101) est pourvu d'une pluralité de douilles de connexion (111) distribuées sur ledit corps de panneau de connexion (110) pour recevoir une pluralité de connecteurs (C') à partir d'un côté de connexion (S3) dudit premier plan de connexion (B1), dans lequel la direction de rétraction (R) est orientée à l'opposé du côté de connexion (S3).

9. Cadre de distribution (100) selon la revendication 8, dans lequel le plan de parcage (A), dans la position de parcage (P1) du panneau de parcage (3), affleure ou affleure sensiblement le premier plan de connexion (B1).

10. Cadre de distribution (100) selon l'une quelconque des revendications 7 à 9, dans lequel le dispositif de parcage (1) est situé adjacent au premier panneau de connexion (101) dans une direction latérale (L) parallèle au premier plan de connexion (B1),
de préférence dans lequel le cadre de distribution (100) comprend en outre une section de guidage (103) pour guider des cordons de connexion (K') loin du premier panneau de connexion (101), dans lequel le dispositif de parcage (1) est situé adjacent à la section de guidage (103) dans une direction latérale (L) parallèle au premier plan de connexion (B1),
de manière plus préférée dans lequel le dispositif de parcage (1) est situé entre le premier panneau de connexion (101) et la section de guidage (103) dans ladite direction latérale (L).

11. Cadre de distribution (100) selon la revendication 10, dans lequel la section de guidage (103) comprend une pluralité de canaux de guidage (131-136) pour guider les cordons de connexion (K') à l'écart du premier panneau de connexion (101) le long de trajets de guidage respectifs définis par la pluralité de canaux de guidage (131-136),
de préférence dans lequel la pluralité de canaux de guidage (131-136) commence au niveau d'un plan d'entrée de canal commun (E), dans lequel les une ou plusieurs de douilles de parcage (31) comprennent une pluralité de douilles de parcage (31) agencées en au moins une rangée s'étendant parallèlement ou sensiblement parallèlement audit plan d'entrée de canal (E).

12. Cadre de distribution (100) selon l'une quelconque des revendications 7 à 11, dans lequel le cadre de distribution (100) comprend en outre ou peut être connecté à une unité de commande (104) qui est connectée de manière fonctionnelle au dispositif de parcage (1) pour commander le déplacement du panneau de parcage (3) dans la direction de rétraction (R),
de préférence dans lequel l'unité de commande (104) est configurée pour rétracter le panneau de parcage (3) sur une distance tampon (X) dans la direction de rétraction (R) automatiquement ou semi-automatiquement.

13. Procédé de parcage temporaire d'un connecteur (C') associé à un cordon de connexion (K') en utilisant le dispositif de parcage (1) selon l'une quelconque des revendications 1 à 6, dans lequel le procédé comprend les étapes consistant à :
- parquer ledit connecteur (C') dans une douille de parcage respective (31') des une ou plusieurs douilles de parcage (31) ; et
- rétracter le panneau de parcage (3) dans la direction de rétraction (R) alors que ledit connecteur (C') est parqué dans la douille de parcage respective (31').

14. Procédé selon la revendication 13, dans lequel le panneau de parcage (3) est dans la position de parcage lorsque ledit connecteur (C') est parqué dans la douille de parcage respective (31'),
de préférence, dans lequel le procédé comprend en outre l'étape consistant à :
- retourner le panneau de parcage (3) dans une direction de retour (Z), opposée à la direction de rétraction (R), vers la position de parcage (P1).

15. Procédé selon la revendication 13 ou 14, dans lequel le procédé comprend en outre les étapes consistant à :
- retirer ledit connecteur (C') de la douille de parcage respective (31') ; et
- connecter ledit connecteur (C') à une douille de connexion choisie (111') d'un premier panneau de connexion (3) adjacent au dispositif de parcage (1),
de préférence, dans lequel le procédé comprend en outre les étapes consistant à :
- choisir une douille de connexion (111') d'un premier panneau de connexion (101) adjacent au dispositif de parcage (1) à laquelle ledit connecteur (C') dans la douille de parcage respective (31') doit être connecté, dans lequel le cordon de connexion (K') associé audit connecteur (C'), avant de rétracter le panneau de parcage (3), présente une longueur libre initiale (G1) disponible pour une connexion qui est insuffisante pour atteindre la douille de connexion choisie (111') ; et
- rétracter le panneau de parcage (3) sur une distance tampon (X) dans la direction de rétraction (R) qui est au moins égale à une longueur libre supplémentaire (G2) nécessaire pour que le cordon de connexion (K') associé audit connecteur (C') atteigne la prise de connexion choisie (111'),
de manière plus préférée dans lequel la distance de tampon (X) est au moins égale à une distance latérale entre la douille de parcage respective (31') et la douille de connexion choisie (111') dans une direction latérale (L) parallèle ou sensiblement parallèle au plan de parcage (A) lorsque le panneau de parcage (3) est dans la position de parcage (P1).
